# EUROPEAN PATENT APPLICATION

(11) **EP 1 783 997 A1**
(43) Date of publication of application: **09.05.2007**
(21) Application number: 05292353.9
(22) Date of filing: 07.11.2005
(51) Int. Cl.: H04M 17/00

(54) **Remote activation of a user account in a telecommunication network**

(71) Applicant: Axalto S.A., 92120 Montrouge (FR)
(72) Inventor: Soni, Chintan, Axalto S.A., 92120 Montrouge (FR); Cheung, Wilson , Axalto S.A., 92120 Montrouge (FR); Teng, John , Axalto S.A., 92120 Montrouge (FR)
(74) Representative: Jacquot, Ludovic R. G.

(57) **Abstract**

The invention relates to a personal token (20) storing a temporary account (32) identifier and a permanent account (34) identifier, said token storing and running a set of instructions for disabling said temporary account identifier and activating said permanent account identifier, characterized in that the set of instructions comprises instructions for controlling the personal token (20) into collecting and sending personal information concerning the user by means of the terminal (10) to a remote telecommunication system (30,40) before disabling said temporary account (32) identifier and activating said permanent account (34) identifier.

## Description

The invention relates to mobile telecommunications when using a mobile terminal equipped with a personal token.

A personal token is typically a smart cards, but can also be an USB authentication token, MMC (mass memory card) token, an SD (secure digital) card, etc , i.e. tokens which are intended to be associated with a terminal and which implement security functions thanks to an integrated circuit for allowing personal access to a mobile telecommunication network.

Generally speaking in mobile telecommunication world, there exist two kinds of payment methods for a subscriber. The first one is called 'postpaid' in which once the subscriber has finished the registration procedure in retailer's shop, he can start using the service. The usage of the network is charged after some time, normally monthly.

The other method of payment is called 'prepaid'. In this method the subscriber pays beforehand the charges for the network usage for a certain period of 'call time', let's say 1000 minutes of call time. The subscriber needs to buy a SIM card at the retailer's shop, and he needs to register the card at the retailer's shop providing proof of identity etc. Once this registration process is done the account of the subscriber is activated and he becomes able to use the service, until his prepaid call time has expired.

In such case, the subscriber needs to travel to the retailer's shop to register his prepaid SIM, which is inconvenient for him.

In addition, the operator may need to setup many registration centres in many places so that the subscriber can find a shop as close as possible. Further, the retailer (which may be also the operator) needs to provide point of sale terminals for registration of the SIM cards, and hire personnel to handle the registration process.

This invention aims at removing the inconvenience of the existing registration method of a prepaid personal token.

The invention achieves this aim by means of the features which are recited in the appended claims.

The invention also relates to the case of a postpaid token, in which case similar benefits are also obtained.

Other benefits, aims and aspects of the invention will appear through the following description, which is made in reference to the figures, among which :
- figure 1 depicts a part of a telecommunication network in which a registering method according to a preferred embodiment of the invention may be carried out.

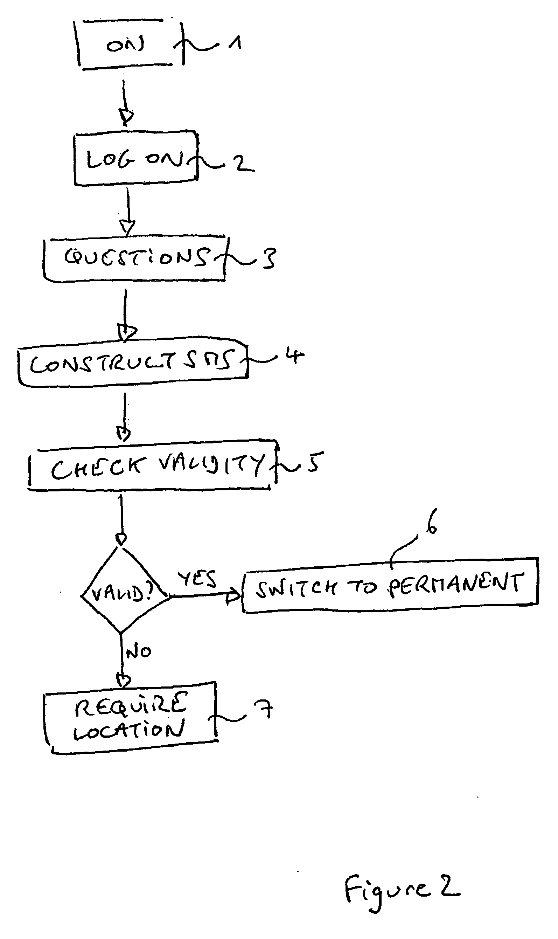

- figure 2 is a diagram which depicts a registering method according to a preferred embodiment of the invention.

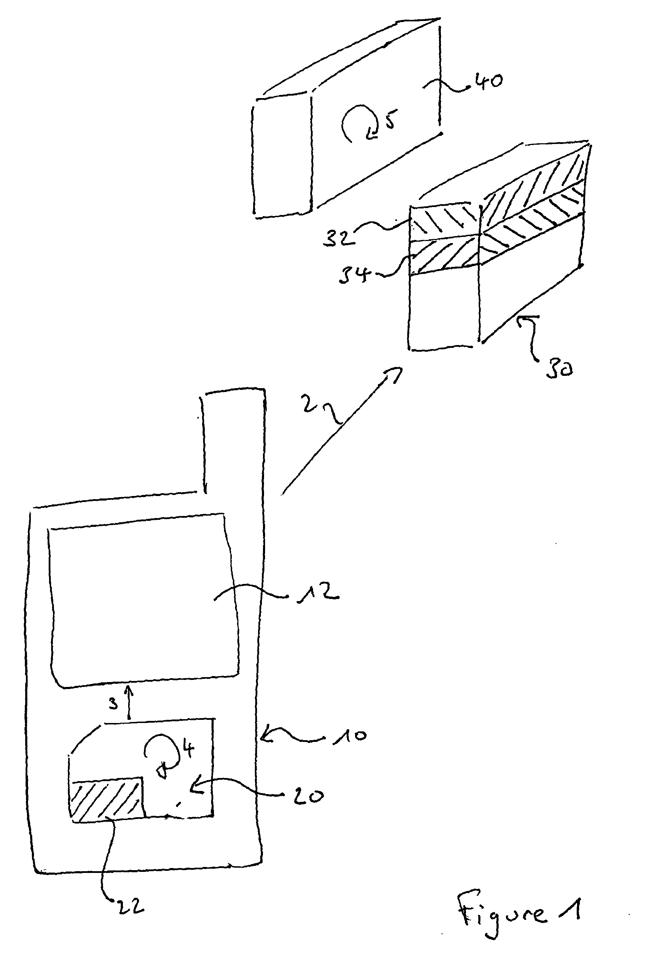

Three main elements are present on figure 1. The first element is a mobile phone 10, which includes a screen 12.

The second element is a prepaid SIM card 20, which stores and runs a series of pieces of software, including an application 22 whose role will be described hereafter. SIM card 20 also stores a secret key Ki which allows the card to authentify in the network, and at least one account identifier which allows a remote server to debit the proper account attached to the SIM card when the SIM card is used for communication.

Such remote server 30 is the third main element which is represented on figure 1. Remote server 30 stores and updates the accounts of the users of the mobile network. In particular, server 30 stores the account attached to the SIM card 20.

In the present case, remote server 30 implements two accounts which may be used by the same card 20. A first one of these two accounts is a generic account 32 which may be used by a plurality of SIM cards as a temporary account when such SIM cards connect for the first time to the network. The second one of these two accounts is an account 34 which is intended at being associated permanently with SIM card 20 after such SIM card has already been connected once to the network.

SIM card 20 stores account identifiers for both the temporary account 32 and the permanent account 34.

It will now be described the way in which SIM card 20 is used for perfoming the first connection in the network and thereby allowing the permanent account 34 to be permanently activated with such SIM card 20.

When the prepaid SIM card 20 is delivered to the user, the identifier of the permanent account 34 is an inactive identifier, which remains hidden in the card until activated.

At step 1 represented on figure 1, the user introduces the SIM card 20 into the mobile handset 10 and powers the handset on.

At step 2, once the handset is turned on, the handset logs on to the operator's network using the temporary account 32. After log on, the operator will inform the handset that the log on is successful. Same information confirming the log on is transferred from the handset 10 to SIM card 20 and in response application 22 gets launched in the SIM card.

At step 3, application 22 requires the handset 10 to display some questions on the handset's screen 12, for example by means of SIM toolkit instructions to the handset. The displayed questions have the purpose of getting information from the user which intend to get knowledge of the identity of the user.

In the present embodiment, such informations about the user are needed so as to oblige the user to declare a real and valid identity. The questions therefore relate to identity information of the user. The questions include 'Name of the subscriber', 'driver license', 'Social security number'. The questions can vary according to the information needed so as to identify the user.

After the user enters the answers to all the questions which popped up on the screen of the handset, the handset returns these answers to the SIM card 20.

At step 4, the SIM card 20 constructs an SMS which encompasses the collected information and the SIM card 20 asks the handset 10 to send this SMS to the remote server 30.

Such SMS can previously be encrypted by a special encryption module implemented on the SIM card, especially in the case when the collected information about the user is sensitive.

Remote server 30 is preferably a back-end server of the operator and handset 10 is preferably instructed by the SIM card to send the SMS especially to such backend server of the operator. To this end application 22 preferably has the address of such server 30 prestored in its memory.

In the present embodiment, once the remote server 30 receives the SMS, the remote server sends the information supplied by the user to a server 40 owned by an authority, for example a governmental authority.

In some countries it is necessary that an authority be informed of the identity of each person which becomes entitled to a mobile phone account.

In this scheme it is a mandatory provision that such information be sent to the authority before the card is delivered to the user. Such sending of the personal information identifying the user is typically done by fax.

Thanks to the present embodiment of the invention, such information is provided automatically to an authority server 40 through the remote server 30 of the operator. Transfer of the information to the authority 40 can be done by an on-line system linked to the operator's server 30 so that the information can be obtained real time by the authority, or by an off-line system in which the verification is rather done batch by batch.

In the present case, the information sent to the remote server 30 also includes data identifying the retailer by whom the card 20 has been purchased.

Such data is constituted by a retailer identifier, and includes a special password of the retailer or retailer PIN. To this end the retailer is required to respond to corresponding questions appearing on the screen 12 of the handset 10.

This way the operator is informed in real time of the sales performed by each of the retailers.

The information also includes presently some data which is prestored inside the SIM card 20. Such data include the MSISDN (Mobile Station International Subscriber Dialing Number) and the IMEI.

The information also comprises here some location information as provided by an automatic location determining module of the handset.

At step 5, the authority 40 checks whether the present part of information as provided by the user is valid, i.e. whether such information constitutes a consistent set of identity data. To this end, the authority server 40 includes a database storing the personal informations about the persons residing in the country, and the authority server 40 checks whether the provided information corresponds to the civil records of one of the persons who are listed in the database.

The remote server 40 here advantageously checks an originating address, which should be the same for all the prepaid cards.

The remote server 30 also checks the mobile number which is advantageously part of the SMS content. The remote server 30 may have a database of all the prepaid cards and in the case the mobile number is not in the database, an alarm message is sent to some predefined mobile numbers.

Advantageously the remote server 30 implements a database of all the retailers and if the retailer identifier is wrong an alarm message is sent to predefined mobile numbers. An SMS is advantageously sent to the subscriber informing that the retailer identifier is wrong, inviting for a retrying to input it on the screen of the handset 10.

The retailer PIN is also checked and a message is also sent to the subscriber if the retailer PIN is wrong, inviting for a retry.

In another embodiment, the authority 40 simply stores the personal informations about the user in a specific database containing the users of mobile phones, without any checking operation.

At step 6, the authority server 40 informs the operator's backend server 30 whether the personal informations are valid or not according to the checking steps which have previously been performed.

Different operations may be performed afterwards according to whether the information is declared valid or not by the authority server 40.

In the case the information proves to be valid, the remote server 30 of the operator sends a confirmation SMS to the handset 10 and the handset 10 forwards this SMS to the SIM card 20 directly without any modification.

At step 6, once SIM card 20 receives this confirmation SMS that the information has been assessed as valid, application 22 disables the temporary account identifier used previously, and activates an identifier which identifies permanent account 34. Said identifiers of the temporary account and of the permanent account 34 are pre-stored in the SIM card 20 originally, the identifier of the permanent account 34 being stored as an inactive identifier.

Application 22 therefore disables the temporary account identifier and activates the identifier of the permanent account 34.

Alternately or additionally to the switch of identifier in the SIM card, the remote server 30 may switch from temporary account 32 to permanent account 34 as active account for the SIM card 20.

The account identifiers are the numbers which allow the SIM card and the remote server to determine which user account is to be charged for the communication. Such identifier is typically the IMSI (international mobile subscriber identifier).

Such identifiers may be associated to respective secret keys. Each secret key allows the SIM card to authentify as entitled to access to the network. Such key is typically used according to what is known as a key challenge, i.e. the remote server sends a random to the card and expects a special result of a given treatment of the random by means of the secret key on the side of the card. The card provides a result that the remote server compares with the expected result before allowing the card to access the network.

In the present preferred embodiment, the card stores initially both a temporary secret key and a permanent secret key, the temporary secret key becoming disabled and the permanent key activated by application 22 simultaneously when the temporary account identifier is replaced by the permanent account identifier.

After the identifiers and secret keys are switched inside the card, application 22 then asks the handset 10 to 'refresh', meaning that the handset 10 resets itself and starts a log-on process using the permanent account 34.

After refresh, the user can enjoy the normal prepaid service immediately which is provided by the operator to the present prepaid SIM card 20.

A "welcome to XXXX network" message may be displayed.

Transition form a restricted service associated with the temporary identifiers into a normal service associated with the permanent identifiers may be performed by application 22 switching the card from "fixed dialing number" (FDN) mode to "Abbreviated dialing mode" (AND).

In the present case, temporary account 32 allows the user to only connect to the server for the purpose of providing his personal information. No voice communication is allowed nor ordinary SMS exchanging service.

Indeed, the generic account 32 is preloaded in every prepaid SIM card such as card 20, and every such SIM card uses the same account for its first connection to the network.

Application 22 is disabled at this stage.

Thanks to the present embodiment of the invention, activation of the SIM card 20 with the permanent account 34 can not be carried out until such sending of the personal information about the user is duly performed.

In the case the information supplied to the authority 40 proves to be invalid for such authority 40, the remote server 30 of the operator sends a negative SMS to the handset 10 and the handset 10 forwards this SMS to the SIM card 10 directly without any modification.

Application 22 identifies this SMS as a negative SMS. From this point, at step 7 application 22 asks the handset 10 to provide the present location of the handset 10. The handset 10 returns the present location to the SIM card 10.

The SIM card 20 then constructs an SMS which contains the location of the handset, and requires the handset to send this SMS to the remote server 30 of the operator.

The operator provides the location information to the authority server 40 so that the authority initiates tracking of the fraudulent user and initiates action against the user if needed.

In case such negative SMS is received by SIM card 20, the card does not proceed to activation of the identifier for the permanent account 34, the user being therefore denied the services attached to said permanent account 34, i.e. voice communication and regular SMS service.

## Claims

1. A method for activating a user account (34) in a mobile telecommunication network, said method comprising the following steps :
a) providing a personal token (10) storing a temporary account (32) identifier and a permanent account (34) identifier, said token being associated with a mobile terminal (10),
b) providing a remote telecommunication system (30,40) supporting said temporary account (32) and able to support said permanent account (34),
c) connecting said personal token (20) to the network using said temporary account identifier,
d) disabling said temporary account (32) and activating said permanent account (34) for future connections between the personal token and the remote telecommunication system (30,40),
the method being **characterized in that** it includes the intermediary step which consists in the personal token (20) collecting and sending personal information concerning the user by means of the terminal (10) to the remote telecommunication system (30,40) before performing step d).

2. The method according to claim 1, **characterized in that** the personal token (20) implements an application which questions the user about his personal information and prepares a message to the attention of the remote telecommunication system (30,40).

3. The method according to claim 1, **characterized in that** it comprises the step which consists in checking whether the user's personal information is valid before performing step d).

4. The method according to claim 1, **characterized in that** step d) comprises the sub-step which consists in the remote telecommunication system (30,40) sending a message to the personal token (20) which message allows the personal token (20) to replace the temporary account (32) identifier by the permanent account (34) identifier as active identifier in the personal token.

5. The method according to claim 1, **characterized in that** step d) comprises the sub-step which consists in the remote telecommunication system (30,40) replacing the temporary account (32) by the permanent account (34) as active account attached to the personal token.

6. The method according to claim 1, **characterized in that** it includes the intermediary step which consists in the personal token (20) sending by means of the terminal (10) an identifier of a retailer where the token has been obtained to the remote telecommunication system before performing step d).

7. The method according to anyone of claims 1 to 6, **characterized in that** the personal information concerning the user includes an information from the group consisting in name, social security number, passport number, driving licence number, date of birth.

8. A personal token (20) storing a temporary account (32) identifier and a permanent account (34) identifier, said token storing and running a set of instructions for disabling said temporary account identifier and activating said permanent account identifier, **characterized in that** the set of instructions comprises instructions for controlling the personal token (20) into collecting and sending personal information concerning the user by means of the terminal (10) to a remote telecommunication system (30,40) before disabling said temporary account (32) identifier and activating said permanent account (34) identifier.

9. The personal token according to claim 8, **characterized in that** it stores and runs an application (22) which encompasses said instructions for collecting and sending personal information concerning the user to the remote telecommunication system (30,40) by means of the terminal (10).

10. The personal token according to claim 8, **characterized in that** it stores and runs instructions for identifying a incoming SMS as allowing the token (20) to replace the temporary account (32) identifier by the permanent account (34) identifier as active identifier in the personal token (20).

11. The personal token according to claim 8, **characterized in that** it stores and runs instructions for sending by means of the terminal an identifier of a retailer where the token has been obtained to the remote telecommunication system (30,40) before disabling said temporary account identifier and activating said permanent account identifier.

12. The personal token according to claim 8, **characterized in that** it stores and runs instructions for collecting and sending by means of the terminal (10) personal information concerning the user which information pertains to the group consisting in name, social security number, passport number, driving licence number, date of birth.

13. A remote telecommunication system (30,40) in a mobile telecommunication network, the remote telecommunication system (30,40) supporting a temporary account (32) attached to at least one personal token (20) associated with a mobile terminal (10) in the network and being able to support a permanent account (34) attached to said personal token (20), the remote telecommunication system (30,40) including an authority entity (40) which receives personal information about a user of said personal token by means of a message originating from said personal token, which checks validity of the personal information about the user, and which provides allowance as to replacement of an identifier of the temporary account (32) by an identifier of the permanent account (34) in the personal token (20) in case the personal information about the user turns out to be valid.

14. The remote telecommunication system (30,40) according to claim 13, **characterized in that** it stores and runs a set of instructions for sending a message to the personal token (20) via the terminal (10) in case the personal information about the user turns out to be valid, which message entitles the personal token (20) to replace the temporary account identifier by the permanent account identifier in the token.
